# EUROPÄISCHE PATENTANMELDUNG

(11) **EP 0 890 383 A1**
(43) Veröffentlichungstag der Anmeldung: **13.01.1999**
(21) Anmeldenummer: 98112563.6
(22) Anmeldetag: 07.07.1998
(51) Int. Cl.: B01D 21/24, B01D 21/00, B01D 21/06, B01D 17/032

(54) **Vorrichtung zur Entnahme von geklärtem Abwasser aus Rundbecken**

(30) Priorität: 10.07.1997 DE 19729889
(71) Anmelder: Freimann, Robert, Dipl.-Ing., 84453 Mühldorf am Inn (DE)
(72) Erfinder: Freimann, Robert, Dipl.-Ing., 84453 Mühldorf am Inn (DE)
(74) Vertreter: Lewald, Dietrich, Dipl.-Ing.

(57) **Zusammenfassung**

Die Erfindung begtrifft eine Vorrichtung zur Entnahme von geklärtem Abwasser aus Rundbecken und zeichnet sich aus durch ein im mittleren Bereich des Beckens angeordnetes sternförmiges Tauchrohr 12 zum gleichmäßigen Abzug des geklärten Abwassers, wobei das Tauchrohr immer überstaut, insbesondere 30 cm unter der verstellbaren Ablaufkante, betrieben ist.

## Beschreibung

Die Erfindung betrifft eine Vorrichtung zur Entnahme von gekärtem Abwasser aus Rundbecken. Solche Vorrichtungen sind bekannt, beispielsweise in Form überstauter mit Durchbrechungen versehener Tauchrohre nahe des Umfangs der jeweiligen Becken (G 92 09 739.1).

Die Erfindung richtet sich auch auf eine Vorrichtung (vom gleichen Tage), bei der das Abwasser konzentrisch nahe der Außenwand beispielsweise über ein mit Durchbrechungen versehenes Tauchrohr nahe der Bodensohle eingeleitet ist (internes-Aktenzeichen F*1657; Patentamts-Aktenzeichen: Würde man bei solchen außenwandnahen konzentrischen Einleitungen eine gerade oder gezackte Zahnschwelle als zentrumsnahe-Ablaufvorrichtung vorsehen, so ergäbe dies den Nachteil einer sehr hohen Schwellenbelastung sowie einer aufwendigen Schwimm-schlammabwehr.

Bekannt sind auch durch die Firma Lakeside Einleitungen, bei denen das Abwasser vom Umfang eingeführt wird, nach unten geht und sich unten verteilt, dann aufsteigt und über Ablaufwehre, die etwa in der Mitte des Beckens angeordnet sind, abfließt. Dieser Ablauf wird ungünstig durch Algenwachstum im Bereich der Zahnschwelle einerseits beeinflußt. Andererseits verändern schon kleine Strömungen der Wasseroberfläche wie z.B. Wind, die Symmetrie. Im ungünstigsten Fall bleibt damit etwa der halbe Rinnenumfang ungenützt, beispielsweise auf Grund völlig unterschiedlicher Windverhältnisse auf der Lee- verglichen mit der Luvseite. Dies bedeutet, daß über den restlichen Teil die doppelte Menge abströmt, während sich an der Leeseite die Absetzleistung verringert. Schwimmschlamm wird verstärkt mitgerissen, der Betreiber wird mit höheren Abgaben belastet. Weitere Schwierigkeiten sind darin zu sehen, daß aus den oben genannten Gründen die Zahnschwellenmontage ein aufwendiges Ausnivellieren erfordert. Zudem ist das Wasserniveau nicht getrennt von der Ablaufmenge regelbar. Neben einem hohen Reinigungsaufwand der Rinnen ist mit einer Ablaufbelastung mit Feststoffen zu rechnen.

Der Erfindung liegt demgegenüber die Aufgabe zugrunde, bei Rundbecken und insbesondere auch solchen, die vom Rand beschickt werden, die Ablaufmenge zu vergleichmäßigen, dabei zu vergrößern, den Wasserstand im Rundbecken unabhängig vom Abzug des geklärten Abwassers zu machen und Schwimmschlammabtrieb zu vermeiden.

Erreicht wird dies bei einer Vorrichtung der eingangs genannten Art durch ein im mittleren Bereich des Beckens angeordnetes sternförmiges Tauchrohr zum gleichmäßigen Abzug des geklärten Abwassers, wobei das Tauchrohr immer überstaut, insbesondere 30 cm unter der verstellbaren Ablaufkante, betrieben ist.

Das sternförmige Tauchrohr ist voll gefüllt, zentrumsnah angeordnet und dient dem flächigen Abzug des geklärten Abwassers.

Es wird also von unterhalb der Oberfläche des geklärten Abwassers eine gleichmäßige regelbare Menge zum Ablauf gebracht. Der Ablauf kann mengengesteuert sein.

Vorzugsweise besteht das sternförmige Tauchrohr aus mindestens drei strahlensternförmig angeordneten Teilleitungen, wobei die Sternrohre zwischen dem Mittelpunkt des Beckens und dem Beckeninnenumfang, insbesondere näher zur Mitte hin, enden.

In Weiterbildung der Erfindung kann dem konzentrischen äußeren Zuleitungstauchrohr ein zentrisches und konzentrisches sternförmiges Ablaufrohr zugeordnet sein.

Das sternförmige Tauchrohr kann mit einem außerhalb des Rundbeckens angeordneten Ablaufschacht über eine Sammelleitung verbunden sein; eine höhenverstellbare Ablaufeinrichtung zum Ablaufschacht hin kann vorgesehen sein und es kann eine einzige Sammelleitung, die auch über eine Dükerleitung nach außerhalb des Beckens geführt wird, angeordnet sein.

In Weiterbildung der Erfindung ist es möglich, die Sternrohre von einer konzentrischen mittigen Ringleitung aus abgehen zu lassen. In dem einen Fall läuft das geklärte Abwasser also in eine Leitung über Tauchrohrstutzen ein, im anderen Fall beaufschlagen die Stutzen zunächst eine Ringleitung und diese Ringleitung führt zum Ablaufschacht hin.

In sämtlichen Fällen können Durchbrechungen oder Schlitze in den Tauchrohren vorgesehen sein. Schlitze verhindern durch die sich einstellende Spiralströmung im Rohr schlammablagerungen.

Zulauföffnungen zum sternförmigen Tauchrohr können auch als Schlitze von mindestens 10 mm Breite ausgebildet sein, wobei durch Verändern der Schlitzlänge eine genaue Anpassung an den Druck der Überstauung, die Rohrreibungsverluste etc. herbeiführbar ist.

In einer anderen Ausführungsform kann das Ablauftauchrohr aber auch sternförmig, in der Art einer Teigform für Weihnachtssterngebäck ausgebildet sein. Dies bedeutet, daß der Rohrverlauf nicht ringförmig und geschlossen sondern sternförmig und geschlossen ist. Die Schlitze sitzen wieder auf den Rohren, können aber auch an den Rohren oder an beliebigen Stellen angebracht sein. Statt der Schlitze können Durchbrechungen oder runde Bohrungen vorgesehen sein.

Die Mengensteuerung der Ablaufrohre wird man im allgemeinen durch Veränderung des Höhenunterschieds zwischen dem Wasserstand im Becken und dem Wasserstand im Ablauf vornehmen. Die Durchbrechungen oder Schlitze können gleichen Abstand zueinander haben.

Bei erfindungsgemäßer Dimensionierung der Rohröffnungen und - durchmesser genügt ggf. eine einzige Ablaufleitung in Form eines Dükers. Diese führt zu einer Überlaufschwelle, welche unabhängig vom Wasserspiegel geregelt wird. Die Ablaufeinrichtung selbst kann eine Regulierschwelle sein.

Durch die Maßnahme nach der Erfindung kann der Wasserstand im Becken auf variable Höhe gefahren werden. Die Überstauung über dem sternförmigen strahlenartigen oder geschlossenen Tauchrohr kann unabhängig von der Abflußmenge regelbar gefahren werden.

Die Höhendifferenz ist für das Gefälle und auch für die Geschwindigkeit verantwortlich. Durch Heben und Senken der Ablaufeinrichtung kann die Regelung automatisch, falls gewünscht, erfolgen.

Durch die Maßnahmen nach der Erfindung wird die Betriebssicherheit erhöht, der Wartungsbedarf verringert, die Feststoffabscheidung verbessert, ebenso der Reinigungsgrad. Die Abwasserabgaben werden gesenkt.

Durch die Anordnung eines sternförmigen Tauchrohres im Abstand unterhalb des Freispiegels, wo schon stabile Verhältnisse herrschen, schützt das geschlossene Rohr das Entnahmewasser vor Licht und verhindert dadurch die Fotosynthese. Die Ablaufmenge wird unabhängig von der Überstauung.

Die Vorteile der genauen Regelung und des erhöhten Ablaufs werden durch den Betrieb der Sammelleitung als gefülltes Rohr gewährleistet. Die Sammelleitung führt als Dükerleitung zu der Überfallschwelle, wo eine separate Regelung erfolgt. Eine Anpassung an den gewünschten Betriebszustand ist möglich. Aufgrund des geschlossenen Rohrsystems kann die Ablaufmenge getrennt eingestellt werden. Unabhängig von der Größe der öffnungen ist die maximale Abflußmenge genau berechenbar.

Statisch erfolgt die Abstützung durch Abhängen von der Räumerbrücke, wodurch eine drehbare Lagerung gegeben ist.

Bei Unterwasserräumern kann eine nicht-drehbare Lagerung erfolgen.

Bei der Berechnung der Anlage sind Verluste wie Rohrreibung, gegebenenfalls Stoßverluste, Druckhöhenverluste, Beschleunigungsverluste infolge der Zuströmung senkrecht zur Fließrichtung im Rohr zu berücksichtigen.

Unter der US-Patent-Nr. 5 066 393 vom November 1991 ist eine Sammel- und Verteilervorrichtung, bestehend aus mehreren Teilleitungen, bekannt. Im Gegensatz zur vorliegenden Erfindung; jedoch sind die einzelnen Teilleitungen durch Ventile vor Rückströmungen voneinander geschützt. Zudem münden die Teilleitungen in ein spezielles Gehäuse, bevor die Weiterleitung erfolgt. Diese Maßnahmen sind im Rahmen der vorliegenden Erfindung nicht notwendig, da durch geeignete Verhältnisse zwischen den öffnungsgrößen und den Teilleitungen die Belastung der Teilleitungen gleich ist und damit Rückströmungen verhindert werden.

Beispielsweise Ausführungsformen der Erfindung sollen nun anhand der beiliegenden Zeichen näher erläutert werden. Diese zeigen in
- **Fig. 1**: eine erste Ausführungsform eines sternförmigen Tauchrohrs innerhalb eines Rundbeckens;
- **Fig. 2**: ist eine Draufsicht zu Fig. 1;
- **Fig. 3**: zeigt ein Detail des Auslaufs;
- **Fig. 4a**: zeigt oben eine Draufsicht auf eine schematisiert dargestellte zweite Ausführungsform und
- **Fig. 4b**: unten eine schematisierte Ansicht.

In einem Rundbecken 10, im allgemeinen aus Beton, ist zentrisch eine sternförmige Sammelleitung 12 angeordnet, und zwar im getauchten Zustand im Abstand unterhalb des Freispiegels 14. Bei 24 befindet sich eine wandnahe, konzentrische Zulauf-Vorrichtung. Das Wasser strömt also über den Einlauf 24 zu. Das geklärte Wasser wird definiert über die sternförmige Leitung 12 abgezogen, die unter gleichem Abstand Schlitze 22 aufweist. Diese Schlitze können Mindestbreiten von 10 mm haben.

Nach dem Austritt aus der Austrittsleitung 16 tritt das Wasser in eine Einrichtung mit Regulierschwelle 23 ein. Da diese Regulierschwelle, wie durch den Doppelpfeil angedeutet, heb- und senkbar ist, ist der Einlauf unabhängig vom Ablauf und die Flüssigkeitsstandhöhe im Rundbecken unabhängig vom Austritt regelbar. Die sternförmige Leitung 12 und die Austrittsleitung 16 sind immer voll gefüllt. Aus der Regulierschwelle strömt das Wasser in einen nicht dargestellten Ablaufschacht. Es ist auch möglich, die Höhenverstellbarkeit der Regulierschwelle 23 zu automatisieren. Immer ist die (Druck)höhendifferenz verantwortlich für das Gefälle und die Geschwindigkeit. Bei der Steuerung der Druckhöhendifferenz zwischen dem Freispiegel 14 und dem Flüssigkeitsstand 20 in der Regulierschwelle 23 sind noch Rohrreibungsverluste, Verluste durch Flüssigkeitsreibung, Beschleunigungsverluste beim Eintritt der Flüssigkeit in die verchiedenen Schlitze der Sammelleitung 12 und gegebenenfalls Verluste aufgrund turbulenter Strömung zu berücksichtigen. Es wird immer ein volles Rohr betrieben. Da das sternförmige Tauchrohr immer unter Druck durchströmt wird, ist es an sich unerheblich, ob die Zuflußöffnungen am Rohrscheitel, an der Seitenwand oder an der Rohrsohle angebracht sind. Durch die oben erwähnte Ausbildung der Zuflußöffnungen am sternförmigen Tauchrohr als Schlitze von mindestens 10 mm Breite, ist es durch Veränderungen der Schlitzlänge möglich, eine Anpassung an die hydraulischen Randbedingungen herbeizuführen. Der Schlammtrichter ist mit 30 bezeichnet, dir rotirende Räumerbrücke mit 50.

Nach Obigem wird das sternförmige Tauchrohr selbst über die Ablaufleitung mit dem Ablaufschacht verbunden. In Abwandlung der oben beschriebenen Maßnahme ist es schließlich noch möglich, die Vorrichtung ebenfalls zur Entnahme aus Rechteckbecken zu verwenden.

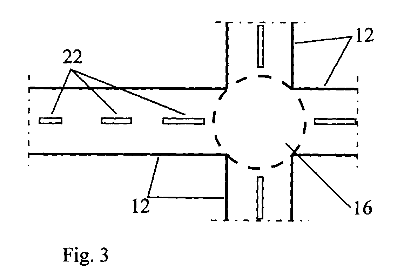

In Fig. 3 ist ein Detail der sternstrahlenförmigen Ausführungsform dargestellt. Über die Durchbrechungen 22 erfolgt die Beaufschlagung der Rohrleitungen 12, welche folglich mit bis zur Sammelleitung 16 zunehmendem Durchfluß, also diskontinuierlich, durchströmt werden. Die sternstrahlenförmigen Rohrstücke 12 münden in die Sammelleitung 16, die Teilströme werden also in der Sammelleitung 16 zusammengefaßt und via Dükerleitung in den Ablaufschacht geführt.

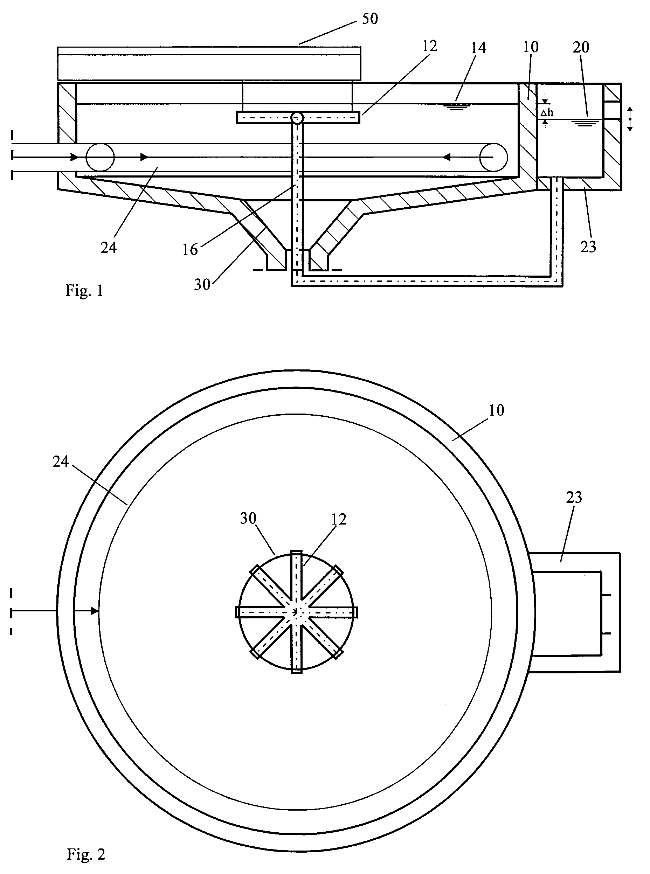

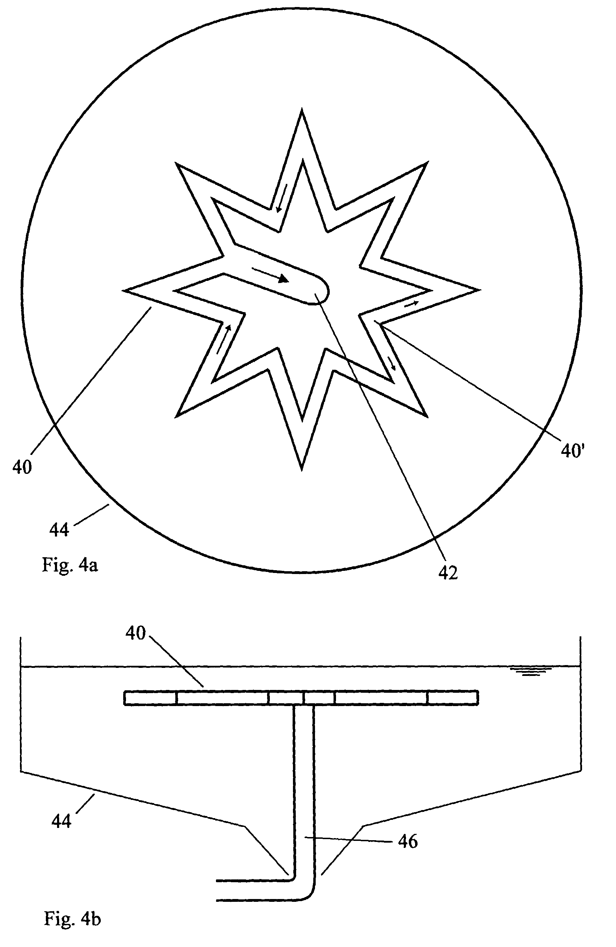

Nach Fig. 4 ist im Gegensatz zu Fig. 1/2 der Auslauf nicht als sternstrahlenförmig abziehende Rohre sondern in Form eines Sterns 40 ausgebildet, etwa in der Form eines für Weihnachtsgebäck üblichen Sterns. D.h. es sind nicht einzelne Rohre die strahlenförmig abgehen, sondern es ist eine geschlossene Zackenformleitung vorhanden. Hier sind also statt den strahlenförmig abgehenden Rohren der Fig. 2 mehrere Rohrabschnitte vorgesehen, die zackenförmig zusammengesetzt sind, um eine geschlossene, diskontinuierlich durchströmte Leitung zu ergeben. In 40' liegt keine Strömungsgeschwindigkeit bzw. eine Geschwindigkeit nahe Null vor, im Bereich der Abführleitung 42 liegt die maximale Geschwindigkeit vor. Dies ist auch durch die Pfeilgrößen angedeutet. Der Ablauf erfolgt wieder über eine Abführleitung 42 in eine Sammelleitung 46. Das Becken ist dabei immer ein Rundbecken 44.

Anwendung kann die Maßnahme nach der Erfindung auch auf Rechteckbecken finden. Hier kann die sternartige Ausbildung konzentrisch in der Mitte sitzen. Die sternartige Ausbildung kann aber statt des runden Umfangs der Fig. 2 einen Umfang parallel zu den Wandungen des Rechteckbeckens, aber immer in der Mitte, haben.

## Patentansprüche

1. Vorrichtung zur Entnahme von geklärtem Abwasser aus Rundbecken, gekennzeichnet durch ein im mittleren Bereich des Beckens angeordnetes sternförmiges Tauchrohr (12) zum gleichmäßigen Abzug des geklärten Abwassers, wobei das Tauchrohr immer überstaut, insbesondere 30 cm unter der verstellbaren Ablaufkante, betrieben ist.

2. Vorrichtung nach Anspruch 1, dadurch gekennzeichnet, daß das Rundbecken über eine wandnahe konzentrische Einleitung (24) des Abwasser verfügt.

3. Vorrichtung nach einem der vorhergehenden Ansprüche, dadurch gekennzeichnet, daß das sternförmige Tauchrohr aus mindestens drei strahlen-sternförmig angeordneten Teilleitungen (12) besteht, wobei die Sternrohre zwischen dem Mittelpunkt des Beckens und dem Beckeninnenumfang, insbesondere näher zu Mitte hin, enden.

4. Vorrichtung nach Anspruch 1 oder 2, dadurch gekennzeichnet, daß das sternförmige Tauchrohr aus einer zackenförmigen geschlossenen Ringleitung (40) besteht, wobei die Ringleitung die Fläche zwischen dem Beckenzentrum und dem halben Beckenradius einnimmt.

5. Vorrichtung nach einem der vorhergehenden Ansprüche, dadurch gekennzeichnet, daß dem konzentrischen äußeren Zuleitungstauchrohr (24) ein zentrisches (12; 40) sternförmiges Ablaufrohr zugeordnet ist.

6. Vorrichtung nach einem der vorhergehenden Ansprüche, da-durch gekennzeichnet, daß das sternförmige Tauchrohr mit einem außerhalb des Rundbeckens angeordneten Ablaufschacht über eine Sammelleitung (16) verbunden ist.

7. Vorrichtung nach einem der vorhergehenden Ansprüche, gekennzeichnet durch eine höhenverstellbare Ablaufeinrichtung zum Ablaufschacht hin.

8. Vorrichtung nach einem der Ansprüche 1 bis 6, gekennzeichnet durch einen konstant hohen Wasserspiegel im Ablaufschacht.

9. Vorrichtung nach einem der vorhergehenden Ansprüche, gekennzeichnet durch eine einzige Sammelleitung.

10. Vorrichtung nach einem der vorhergehenden Ansprüche, dadurch gekennzeichnet, daß die Sammelleitung über eine Dükerleitung nach außerhalb des Beckens geführt ist.

11. Vorrichtung nach einem der Ansprüche 5 bis 9, dadurch gekennzeichnet, daß die höhenverstellbare Ablaufeinrichtung ein Regulierschwelle (23) ist.

12. Vorrichtung nach einem der vorhergehenden Ansprüche, gekennzeichnet durch eine Ausbildung derart, daß die Überstauung über dem sternförmigen Tauchrohr unabhängig von der Abflußmenge regelar ist.

13. Vorrichtung nach einem der vorhergehenden Ansprüche, dadurch gekennzeichnet, daß die Sternrohre von einer konzentrischen mittigen Ringleitung abgehen.

14. Vorrichtung nach einem der vorhergehenden Ansprüche, dadurch gekennzeichnet, daß das sternförmige Tauchrohr sich mit dem Räumer drehend ausgebildet ist.

15. Vorrichtung nach einem der vorhergehenden Ansprüche, dadurch gekennzeichnet, daß das sternförmige Tauchrohr gemeinsam mit einem konzentrischen nahe der Beckenwandung oder einem konzentrischen in Beckenmitte befindlichen Tauchrohr für den Abzug des geklärten Abwassers vorgesehen ist.

16. Vorrichtung nach Anspruch 3, dadurch gekennzeichnet, daß die Zulauföffnungen zum sternförmigen Tauchrohr als öffnungen von mindestens 10 mm Breite, wobei durch Verändern der öffnungsgröße eine genaue Anpassung an die hydraulischen Randbedingungen, insbesondere den Druck der Überstauung, die Rohrreibungsverluste herbeiführbar, ausgebildet sind.

17. Vorrichtung nach einem der vorhergehenden Ansprüche, dadurch gekennzeichnet, daß das sternförmige Tauchrohr unter Druck, derart, daß die Anbringung der Zulauföffnungen am sternförmigen Tauchrohr unkritisch ist, durchströmt wird.

18. Anwendung der Maßnahme nach einem der vorhergehenden Ansprüche, auf die Entnahme aus Rechteckbecken, wobei die Auslauföffnungen der Sternrohre den Seiten eines inneren Rechtecks folgend, das oder die Tauchrohr(e) den Seiten des Rechteckbeckens folgend angeordnet sind.
